# EUROPÄISCHE PATENTSCHRIFT

(11) **EP 0 805 752 B1**
(45) Veröffentlichungstag und Bekanntmachung des Hinweises auf die Patenterteilung: **29.03.2000**
(21) Anmeldenummer: 95937140.2
(22) Anmeldetag: 28.11.1995
(51) Int. Cl.: B32B 27/12, B32B 31/12, B32B 33/00, D06N 3/04

(54) **FLÄCHENARTIGES VERBUNDISOLIERMATERIALSYSTEM UND VERFAHREN ZU DESSEN HERSTELLUNG**
FLAT COMPOSITE INSULATING SYSTEM AND METHOD OF PRODUCING SAID SYSTEM
SYSTEME DE MATERIAU ISOLANT COMPOSITE PLAT ET PROCEDE DE PRODUCTION CORRESPONDANT

(43) Veröffentlichungstag der Anmeldung: 12.11.1997
(73) Patentinhaber: KO & CO. KFT, 3580 Tiszaujváros (HU)
(72) Erfinder: KOVACS, Gyula, H-3580 Tiszaujvaros (HU); ORBAN, Jeno, H-3580 Tiszaujváros (HU)
(74) Vertreter: Viering, Hans-Martin, Dipl.-Ing.
(86) Internationale Anmeldenummer: HU9500061
(87) Internationale Veröffentlichungsnummer: WO9719813

(56) Entgegenhaltungen:
- EP-A- 0 114 154
- AT-A- 368 448
- DE-A- 2 339 898
- DE-A- 2 545 700
- DE-A- 3 100 682
- DE-A- 3 106 239
- DE-A- 3 626 350
- DE-U- 9 413 289
- JP-A- 63 286 331
- US-A- 4 283 457
- DATABASE WPI Week 9251 Derwent Publications Ltd., London, GB; AN 92-421166 XP002000846 & JP,A,04 318 095 (NIPPON PETROCHEMICALS)

## Beschreibung

Die Erfindung betrifft ein flächenartiges Verbundisoliermaterialsystem, welches aus einer Polyolefinfaserschicht und aus einer - Metallpigment und/oder einen Zusatz enthaltenden - thermoplastischen Polymerüberzugschicht besteht.

Die Erfindung betrifft weiterhin das zur Herstellung des Verbundisoliermaterialsystems dienende Verfahren.

Das Isoliermaterialsystem kann vorteilhaft als Dämmstoff in der Bauindustrie, oder als Verpackungsmaterial eingesetzt werden.

Bei der Gestaltung von gegen Feuchtigkeit und Wasser dämmend wirkenden Systemen, weiterhin von wärmeisolierenden und schalldämmenden Systemen werden in der technischen Praxis weitverbreitet verschiedene Kunststoff-Folien und -Platten eingesetzt.

Laut den in der Fachliteratur Wasserabdichtungarbeit (Vízszigetelő munka, Műszaki Könyvkiadó, Budapest, 1989) beschriebenen Lösungen werden die Kunststoff-Folien als Isoliermateriale bzw. als Schutzbeläge gegen Wasser und Feuchtigkeit eingesetzt.

Ein aus Polypropylen-Gewebe und PVC-Folie hergestelltes Verbundstoff bzw. das damit hergestellte System wird in US-A-4 315 792 beschrieben.

Das nach diesem Verfahren hergestellte Verbundstoff kann auf zahlreichen Gebieten, so auch in der Bauindustrie eingesetzt werden.

EP-A-0 147 503 offenbart eine wärmegedämmte, hinterlüftete Dachkonstruktion, mit einer Neigung von 10°. Die Dachkonstruktion besteht aus einer wärmemedämmenden Schicht, welche eine Kunststoffschaumschicht (z.B. Polystyrolschaum), oder eine aus Mineralfasern hergestellte Matte sein kann, weiterhin besteht sie aus einer auf diese Schicht aufgelegten Glasfaser- oder Polyurethanschicht und aus einer Polymerfolie.

Die Polymerfolie und die Polyurethanschaumschicht können auch zusammengebaut sein.

Oberhalb der Folie befindet sich eine Belüftungsfläche und dann die Dachkonstruktion.

Nachteil dieser bekannten Systeme ist, dass sie komplizierte, mindestens aus 3 oder 4 Schichten aufgebaute Verbundsysteme sind, und als solche für Wärme- und Schallisolierung und gleichzeitig auch für den Durchlass des Wasserdampfes geeignet sind.

Nachteil von zahlreichen zweischichtigen Systemen ist weiterhin, dass sie eine niedrige mechanische Festigkeit aufweisen, weiterhin, dass sie für Wärme- und Schallisolierung und gleichzeitig für den Durchlass von Wasserdampf nicht geeignet sind.

Wir haben zu unserem Ziel die Ausarbeitung eines derartigen flächenartigen Verbundsystems gesetzt, welches bereits in einer zweischichtigen Konstruktion über die geeigneten wärme- und schalldämmenden Eigenschaften verfügt und zugleich wasserdicht, jedoch gleichzeitig wasserdampfdurchlässig ist.

Das erfindungsgemässe Isoliersystem besitzt neben den obenerwähnten Eigenschaften auch noch eine erhöhte mechanische Festigkeit.

Das Wesentliche unserer Erkenntniss ist, dass wir als Grundschicht als Tragbahn einen solchen aus Polypropylenfasern hergestellten Nadelfilz verwenden, dessen eine oder beide Oberflächenschichten durch Wärmezuführ, bzw. Wärmebehandlung angeschmolzen, dann abgekühlt werden.

Auf der Oberfläche des Nadelfilzes entstehen nach dem Anschmelzen und nach der Abkühlung kleine herausragende, stachelähnliche Faserenden.

Auf die derartig ausgebildete Fläche wird mit einem Extruder eine Schmelze aus Polyäthylen oder Polypropylen aufgetragen.

Dann wird die zur Überzugschicht dienende Kunststoffschicht von den an der Oberfläche des Nadelfilzes herausragenden kleinen Stacheln porös gemacht. Die Poren der Überzugschicht bestehen gemischt aus offenen und geschlossenen Poren.

Das erfindungsgemässe Produkt kann in der Bauindustrie als Isoliermaterial zur Isolierung von Fussböden oder Dächern eingesetzt werden, kann jedoch auch in der Verpackungsindustrie als Verpackungsmaterial verwendet werden.

Gegenstand der Erfindung ist also ein flächenartiges Verbundisoliermaterialsystem, welches aus einer Polyolefinfaserschicht und aus einer Polymerüberzugschicht besteht. Letztere enthält ein Metallpigment und/oder einen Zusatz und wird aus einem thermoplastischen Polymer hergestellt.

Das Isoliermaterial wird dadurch gekennzeichnet, dass es aus einem durch Vernadelung befestigten und mindestens auf der einen Oberflächenschicht durch Anschmelzen wärmebehandelten Polypropylenfaserschicht und aus einer einseitig oder beidseitig mit 20-100 g/m² Flächenmasse aufgetragenen Polyäthylen- oder Polypropylenüberzugschicht besteht, welche im vorliegenden Fall 0,5-2 Massenprozent Metallpigment und/oder 0,1-0,5 Massenprozent UV Stabilisator enthält.

Gegenstand der Erfindung ist weiterhin das zur Herstellung des Isoliermaterials dienende Verfahren.

Im Laufe des Verfahrens wird eine oder beide Oberflächenschichten des Polypropylennadelfilzes, der aus einer Polypropylenfaserschicht bzw. Vlies mit 40-180 Nadeleinstiche/cm² hergestellt wurde, in einer Tiefe von 10-100 µm durch eine auf 170-500 °C Temperatur durchgeführte Wärmebehandlung angeschmolzen, dann wird die Faserschicht abgekühlt und mindestens auf deren eine Seite eine Polymerüberzugschicht von einer 20-100 g/m² Oberflächenmasse aufgetragen. Die Polymerschicht enthält in dem vorliegenden Fall 0,5-2 Massenprozent Metallpigment und/oder 0,1-0,5 Massenprozent UV Stabilisator und besteht aus Polyäthylen und/oder Polypropylen. Die Beschichtung erfolgt aus der Schmelze mit einem Extruder. Nachher wird das Verbundsystem abgekühlt und falls gewünscht, aufgewickelt.

Die Nadelfilzschicht wird zweckmässig aus einem Polypropylenfaservlies, das aus 4-17 dtex feine und 50-100 mm lange Polypropylenfasern besteht, durch Vernadelung hergestellt. Die Vernadelungsdichte ist 40-180 Stichzahl/cm² und die Vernadelung erfolgt zweckmässig in mehreren Stufen, bzw. Gängen. Durch die Vernadelung wird die Faserschicht mechanisch befestigt und sie erreicht dadurch die entsprechende Festigkeit.

Die zur Befestigung verwendete Nadeln durchdringen das Faservlies in senkrechter Richtung.

Die Tiefe der Nadeleindringung, die Frequenz der Einstiche und die Einzieh-bzw. Abzuggeschwindigkeit des Faservlieses kann variiert werden.

Wir verwenden höchstens eine 1000/min. Frequenz.

Zweckmässig verwenden wir eine zweifache Vernadelung.

Die Fahrgeschwindigkeit des Faservlieses ist vorteilhaft 9,6 m/min. Die Dichte der Vernadelung ist vorteilhaft 170/cm².

Der Nadelfilz kann aus Polypropylenfasern von gleicher oder verschiedener Faserlänge und Faserfeinheit hergestellt werden.

Der fertige Polypropylennadelfilz wird einer Wärmebehandlung unterzogen, so dass wir die Oberflächenschicht auf der einen Seite oder auf beiden Seiten anschmelzen.

Danach wird die geschmolzene Schicht abgekühlt.

Die Wärmebehandlung wird bei einer Temperatur zwischen 170 °C und 500 °C durchgeführt.

Dieser Arbeitsvorgang erfüllt zwei Zwecke. Einerseits erhöht er die Festigkeit des Filzes, andererseits bewirkt er die Entstehung der aus der Oberfläche herausragenden kleinen Stacheln.

Diese kleine Stacheln wirken dazu, dass die nötige Porosität der auf die Oberfläche aufgetragenen Folienschicht, bzw. der Überzugschicht entstehen soll.

Die Anschmelzung wird zweckmässig mit Infrarotlampen durchgeführt.

Die Dicke der wärmebehandelten Schicht liegt im Allgemeinen zwischen 10-100 µm.

Bei Anwendung einer Polymerbeschichtung von 50 g/m² Flächendichte ist die vorteilhafte Dicke der wärmebehandelten Schicht 60 µm.

Die Wärmebehandlung wird bei einer Temperatur zwischen 250 °C und 500 °C durchgeführt.

Auf eine Seite, oder auf beide Seiten des Nadelfilzes wird dann eine Polypropylen- oder Polyäthylenschicht aufgetragen.

Falls beide Oberflächen beschichtet werden, kann die Beschichtung aus dem gleichen Polymer oder aus zwei verschiedenen Polymeren bestehen.

Die zum Überzug dienende Schicht oder Schichten können in Form einer Schmelze auf die Nadelfilzschicht aufgetragen werden, mit der Hilfe eines mit breitspaltigem Werkzeug arbeitenden Extruders. Die Polymerschicht (die Polypropylen- oder Polyäthylenschicht) wird zweckentsprechend in einer 20-100 g/m² Flächendichte auf den Nadelfilz aufgetragen. Die Polymerschicht enthält Metallpigment, vorteilhaft Alumkliumpigment, und/oder UV Stabilisator. Als UV Stabilisator verwenden wir zweckmässig TINUVIN 770 (CIBA GEIGY, CH), die Zutaten werden in Form von einem Masterbatch, d.h. dem Polyäthylen- oder Polypropylengranulat zugegeben.

Falls wir ein, auf beiden Seiten mit Polymerbeschichtung versehenes, auf Polypropylennadelfilzbasis hergestelltes Isoliermaterial anfertigen wollen, dann unternehmen wir folgende Schritte: die einseitig, d.h. auf der einen Seite mit Polymer beschichtete Filzrolle setzen wir wieder auf die Abwickelvorrichtung der Beschichtungsanlage und durchführen die Polymerbeschichtung auch auf der zweiten Seite des Filzes.

Die Vorteile des erfindungsgemässen Isoliermaterials sind folgende:
- Hervorragende schall- und wärmedämmende Eigenschaft,
- Wasserundurchlässigkeit und gleichzeitig eine geeignete Wasserdampfdiffusion
- Ausgezeichnete mechanische Festigkeit.

Das erfindungsgemässe Isolermaterial und dessen Herstellungsverfahren wird mit folgenden Beispielen vorgeführt:

### Beispiel 1.

Polypropylen-Stapelfasern werden nach Feinheit und Faserlänge sortiert, dann die Fasern von 6 dtex durchschnittlicher Feinheit und 60 mm Faserlänge auf einer Karde zu einem Vlies verarbeitet.

Aus den Vliesen wird auf einem Kreuzleger ein Kreuzwickel hergestellt, welcher dann in megreren Gängen durch Vernadelung verdichtet und befestigt wird. Die Dichte der Vernadelung bzw. die Anzahl der Nadeleinstiche ist 170/cm².

Das angefertigte Vlies hat eine 40 g/m² Flächendichte.

Eine Oberflächenschicht des Vlieses wird dann in einer Schichtdicke von 60 µm angeschmolzen, durch eine Durchführung unter Infrarotlampen bei einer Temperatur 300 °C, danach wird die angeschmolzene Schicht auf Raumtemperatur abgekühlt.

Die Filzrolle eird danach auf die Abwickelseite der Beschichtunsanlage aufgesetzt und unter dem Werkzeug des Extruders so durchleitet, dass die Polypropylenschmelze auf die wärmebehandelte Oberfläche des Nadelfilzes kommen soll.

Als Beschichtungsmaterial wird ein 0,6 Massenprozent Aluminiumpigment enthaltendes Polypropylenpolymer verwendet. Das Polypropylen wird in 40 g/m² Flächendichte auf den Filz aufgetragen.

Das derart hergestellte Isoliermaterial kann bei Dachkonstruktionen als Unterlageschicht und Dämmschicht eingesetzt werden unter einem Ziegeldach oder einem Schieferdach.

### Beispiel 2.

Aus Polypropylenstapelfasern von 10 dtex Feinheit und 75 mm Faserläge wird ein Nadelfilz von 300 g/m² Flächendichte und von 180/cm² Vernadelungsdichte bzw. Stichzahl hergestellt und die eine Seite des Filzes dann nach Beispiel 1, einer Wärmebehandlung unterzogen.

Der Nadelfilz wird dann auf der wärmebehandelten Seite mit einer Polyäthylenbeschichtung versehen, in einer Flächendichte von 100 g/m². Die Beschichtung wird mit einer Polyäthylenschmelze durchgeführt, welche einen 2 massenprozentigen Aluminiumpigmentgehalt hat.

Das auf dieser Weise hergestellte Isoliermaterial hat wasserhemmende Wirkung und wirk gleichzeitig als ein Spiegel gegenüber den Wärmestrahlen. Es kann bei Fussbodenheizungen zur Ausbildung einer Dämmschicht eingesetzt werden.

### Beispiel 3.

Aus Polypropylenfasern von 15 dtex Faserfeinheit und 75 mm Faserlänge wir ein Polypropylennadelfilz von 500 g/m² Flächendichte und von 160/cm² Stichzahl hergestellt. Er wird nach Beispiel 1 wärmebehandelt und auf die wärmebehandelte Seite wird eine Polypropylenschicht von 80 g/m² Flächendichte aufgetragen.

Das auf dieser Weise hergestellte Isoliermaterial hat eine wasserhemmende Wirkung. Es kann bei der Isolierung von Geschossdecken, sowie von Kellerdecken eingesetzt werden.

### Beispiel 4.

Aus Polypropylenstapelfasern von 6,7 dtex Feinheit und 90 mm Faserlänge wird mit 18/cm² Stichzahl ein Polypropylennadelfilz von 150 g/m² Flächendichte hergestellt. Der Filz wird laut Beispiel 1 wärmebehandelt. Die wärmebehandelte Seite wird mit einer Stabilisator enthaltenden Überzugschicht von 40 g/m² Flächendichte versehen. Der Stabilisator ist 0,2 Massenprozent TINUVIN 770.

Die laut dem Beispiel hergestellte Isolierplatte ist wasserableitend, luftdurchlässig und lichtbeständig.

Sie kann als Unterlage und Isolierschicht für Dachkonstruktionen bei Hochbau eingesetzt werden.

### Beispiel 5.

Aus Polypropylenstapelfasern von 11 dtex Feinheit, 90 mm Faserlänge wird mit 170/cm² Einstichdichte ein Polypropylennadelfilz von 200 g/m² Flächendichte hergestellt. Eine Seite des Filzes wird in einer Dicke von 60 µm wärmebehandelt. Die andere Seite des Filzes wird in einer Dicke von 80 µm wärmebehandelt.

Auf eine Seite des Filzes wird eine 0,5 Masenprozent TINUVIN 770 Stabilisator und 1 Massenprozent Aluminiumpigment enthaltende Polypropylenbeschichtung von 60 g/m² Flächendichte aufgetragen, während auf die andere, in einer Dicke von 80 µm wärmebehandelte Seite mit einer 0,6 Massenprozent Aluminiumpigment enthaltende Polypropylenschicht von 400 g/m² Flächendichte versehen wird.

Die gemäss dem Beispiel hergestellte Isolierplatte ist wasserdicht und lichtbeständig.

### Beispiel 6.

Die gemäss dem Beispiel 1 hergestellte Isoliermaterialplatte wird einer Prüfung unterzogen. Wir erhalten folgende Messergebnisse:
Brandschutzklasse nach DIN 4102: 2B
Reisskraft nach DIN 533384
- Längsrichtung: 286 N/5 cm
- Querrichtung: 394 N/5 cm
Wasserdampfdurchlässigkeit nach DIN 52615: 9,7 g/m²
Temperaturbeständigkeit: -40 bis +80 °C

## Patentansprüche

1. Flächenartiges Verbundisoliermaterialsystem, welches aus einer Polyolefinfaserschicht und aus einer Metallpigment und/oder Zusatz enthaltenden thermoplastischen Polymerüberzugschicht besteht, **dadurch gekennzeichnet**, dass es aus einer durch Nadelfilzverfahren befestigten und wenigstens in einer Oberflächenschicht durch Anschmelzen wärmebehandelten Polypropylenfaserschicht und aus einer, auf eine Seite oder auf beide Seiten dieser Faserschicht aufgetragenen Polyäthylen- und/oder Polypropylenbeschichtung von 20-100 g/m² Flächenmasse besteht, welche 0,5-2 Massenprozent Metallpigment und/oder 0,1-0,5 Massenprozent UV Stabilisator enthält.

2. Verbundisoliermaterialsystem nach Anspruch 1, **dadurch gekennzeichnet**, dass es als Faserschicht eine, aus 4-17 dtex feinen und 50-100 mm langen Polypropylenfasern hergestellte Polypropylenfaserschicht von 140-600 g/m² Flächenmasse enthält, welche mit 40-180 Stichzahl/cm² vernadelt und mindestens auf der einen Seite wärmebehandelt wurde.

3. Verbundisoliermaterialsystem nach den Ansprüchen 1 und 2, **dadurch gekennzeichnet**, dass es eine mit dem Nadelfilzverfahren befestigte, wenigstens auf der einen Seite durch Anschmelzen in einer Dicke von 10-100 µm wärmebehandelte Polypropylenfaserschicht enthält.

4. Verbundisoliermaterialsystem nach den Ansprüchen 1 bis 3, **dadurch gekennzeichnet**, dass die durch Vernadelung befestigte, auf der einen Seite durch Anschmelzen wärmebehandelte Polypropylenfaserschicht auf einer Seite eine in 20-100 g/m² Flächenmasse aufgetragene Polypropylenüberzugschicht enthält.

5. Verbundisoliermaterialsystem nach den Ansprüchen 1 bis 3, **dadurch gekennzeichnet**, dass die durch Vernadelung befestigte, auf der einen Seite durch Anschmelzen wärmebehandelte Polypropylenfaserschicht auf beiden Seiten eine in 20-100 g/m² Flächenmasse aufgetragene, aus Polypropylen hergestellte Überzugschicht enthält.

6. Verbundisoliermaterialsystem nach den Ansprüchen 1 bis 3, **dadurch gekennzeichnet**, dass die durch Vernadelung befestigte, auf der einen Seite durch Anschmelzen wärmebehandelte Polypropylenfaserschicht auf einer Seite eine aus Polyäthylen hergestellte Überzugschicht, in 20-100 g/m² Flächenmasse aufgetragen, enthält.

7. Verfahren zur Herstellung des Verbundisoliermaterialsystems so dass auf eine Polyolefinfaserschicht eine - Metallpigment und/oder Zusätze enthaltende - thermoplastische Polymerschicht aufgetragen wird, **dadurch gekennzeichnet**, dass eine Oberflächenschicht oder beide Oberflächensschichten der mit 40-180 Stichzahl/cm² vernadelten Polypropylenfaserschicht in einer Dicke von 10-100 µm bei einer Temperatur zwischen 170 °C und 500 °C durch Wärmezufuhr angeschmolzen wird, dann die Faserschicht abgekühlt wird und auf mindestens eine der beiden Seiten dieser Faserschicht eine - 0,5-2 Massenprozent Metallpigment und/oder 0,1-0,5 Massenprozent UV Stabilisator enthaltende - Polyäthylenschicht aufgetragen wird, in 20-100 g/m² Flächenmasse, in Form einer Schmelze, dann wird Verbundsystem abgekühlt und wenn gewünscht wird, aufgewickelt.

## Claims

1. A flat composite insulating material system consisting of a polyolefin fibrous material layer and a thermoplastic polymer coating layer, the latter containing metal pigments and/or an additive, characterised in that it consists of a polypropylene fibres layer, bonded by needle punching and heat-treated by fusing on at least one of its surface layers, and of a polyethylene and/or polypropylene coating layer of 20-100 g/m² surface weight and containing 0,5-2 weight per cent metal pigment and/or 0,1-0,5 weight per cent UV stabiliser, said cating layer having been applied to one or both sides of the fibrous layer.

2. The material system according to claim 1, characterised in that, as a fibrous material layer, it contains a polypropylene fibrous layer of 140-600 g/m² surface weight, made of polypropylene fibres of 4-17 dtex fineness and 50-100 mm fibre length, needle punched with 40-180 stitches/cm² and heat treated at least on one side.

3. The material system according to claims 1 and 2, characterised in that it contains a polypropylene fibres layer having been bonded by needle punching and heat treated by fusing on at least one side in a thickness of 10-100 µm.

4. The material system according to claims 1 to 3, characterised in that the polypropylene fibres layer having been bonded by needle felting and heat-treated by fusing on one side contains on one side a polypropylene coating applied in 20-100 g/m² surface weight.

5. The material system according to claims 1 to 3, characterised in that the polypropylene fibres layer having been bonded by needle punching and heat-treated by fusing on both sides contains on both sides a polypropylene coating applied in 20-100 g/m² surface weight.

6. The material system according to claims 1 to 3, characterised in that the polypropylene fibres layer having been bonded by needle punching heat-treated by fusing on one side contains on one side a polyethylene coating applied in 20-100 g/m² surface weight.

7. Method for producing a flat composite insulating material system by applying a thermoplastic polymer layer containing metal pigments and/or additives onto a polyolefin fibrous layer, characterised in that one or both surface layers of the polypropylene fibres needle felted with 40-180 stitches/cm² density is fused in a thickness of 10-100 µm at a temperature of 170 °C to 500 °C by applying heat, then the fibrous layer is cooled and on at least one of the two sides of said fibrous layer a polyethylene layer of 20-100 g/m² containing 0,5 to 2 weight per cent of metal pigments and/or 0,1 to 0,5 weight per cent of UV stabiliser is applied, the layer being applied in the form of a melt, then the composite system being cooled and wound up as required.

## Revendications

1. Un système de matière isolant composite plan, composé d'une couche de matière fibreuse de polyoléfine et d'un revêtement polymère thermoplastique, le dernier comportant des pigments métalliques et/ou des additifs, caractérisé par ce qu'il consiste d'une couche de polypropylène fibreuse, stabilisée par aiguilletage de feutre et dont au moins la surface d'un côté a été soumis a un traitement thermique par fondage, et d'un couchage de polyéthylène et/ou de polypropylène d'un grammage de 20-100 g/m² appliqué sur une ou sur tous les deux côtés de cette couche fibreuse, le couchage comportant 0,5-2 pour cent de masse de pigments métalliques et/ou 0,1-0,5 pour cent de masse de stabilisateur UV.

2. Système selon revendication 1, caractérisé par ce qu'il comporte, comme la couche fibreuse, une couche de polypropylène fibreuse, fabriquée de fibres de propyléne de 17dtex de ténuité et de 140-600 g/m² de grammage et feutrée avec une densitée de piqûre de 40-180 piqûres/cm² et, d'au moins un côté, soumis à un traitement thermique.

3. Système selon les revendications 1 et 2, caractérisé par ce qu'il comporte une couche de poylpropylène fibreuse stabilisée par aiguilletage de feutre et, d'au moins l'un côté, sur une épaisseur de 10-100 µm, étant été soumis à un traitement thermique par fondage.

4. Système selon les revendications 1 à 3, caractérisé par ce que la couche de polypropylène fibreuse stabilisée par feutrage, d'un côté traitée thermiquement par fondage comporte, sur l'un côté, une couche de revêtement faite de polypropylène de grammage de 20-100 g/m².

5. Système selon les revendications 1 à 3, caractérisé par ce que la couche de polypropylène fibreuse stabilisée par feutrage, d'un côté traitée thermiquement par fondage comporte, sur tous les deux côtés, une couche de revêtement faite de polypropylène de grammage de 20-100 g/m².

6. Système selon les revendications 1 à 3, caractérisé par ce que la couche de polypropylène fibreuse stabilisée par feutrage, d'un côté traitée thermiquement par fondage comporte, sur l'un côté, une couche de revêtement faite de polyethylène de grammage de 20-100 g/m².

7. Méthode de production du système de matière isolant composite par appliquer sur une couche de polyoléfine fibreuse une couche polymère thermoplastique contenant des pigments métalliques et/ou des additifs, caractérisé par ce qu'on fond par adduction de chaleur une couche superficielle ou tous les deux couches superficielles de la couche de polypropylène fibreuse feutrée avec une densitée de piqûre de 40-180 piqûres/cm² sur une épaisseur de 10-100 µm et à une température de 170 °C à 500 °C, fait ensuite refroidir la couche fibreuse et applique, sur au moins une des deux côtés de cette couche fibreuse, une couche de polyéthylène de grammage de 20-100 g/m² contentant 0,5 à 2 pour cent de masse de pigments métalliques et/ou 0,1 à 0,5 pour cent de masse de stabilisateur UV, la couche étant appliquée sous forme fondue, ensuite on fait refroidir le système composite et, à souhait, l'enroule.
